# EUROPÄISCHE PATENTSCHRIFT

(11) **EP 2 665 587 B1**
(45) Veröffentlichungstag und Bekanntmachung des Hinweises auf die Patenterteilung: **01.06.2016**
(21) Anmeldenummer: 12701313.4
(22) Anmeldetag: 16.01.2012
(51) Int. Cl.: B27C 1/08, B27C 5/06, B23Q 17/24

(54) **KEHLMASCHINE ZUM BEARBEITEN VON STABFÖRMIGEN WERKSTÜCKEN AUS HOLZ, KUNSTSTOFF UND DERGLEICHEN**
MOULDER FOR MACHINING ROD-SHAPED WORKPIECES CONSISTING OF WOOD, PLASTIC AND SIMILAR
MACHINE À MOULURER POUR L'USINAGE DE PIÈCES EN FORME DE BARRES EN BOIS, MATIÈRE PLASTIQUE OU SIMILAIRE

(30) Priorität: 19.01.2011 DE 102011009548
(43) Veröffentlichungstag der Anmeldung: 27.11.2013
(73) Patentinhaber: Michael Weinig Ag, 97941 Tauberbischofsheim (DE)
(72) Erfinder: ENGLERT, Heinrich, 97922 Lauda-Königshofen (DE); GRAMLICH, Rainer, 74747 Oberwittstadt (DE); RAPP, Walter, 97953 Königheim-Gissigheim (DE); WAGNER, Ralf, 74736 Hardheim (DE); KURZ, Rainer, 97999 Igersheim (DE)
(74) Vertreter: Jackisch-Kohl, Anna-Katharina
(86) Internationale Anmeldenummer: PCT/EP2012/000150
(87) Internationale Veröffentlichungsnummer: WO 2012/097968

(56) Entgegenhaltungen:
- EP-A2- 0 924 027
- DE-A1- 1 800 470
- DE-A1- 3 046 548
- DE-A1- 3 049 556
- DE-A1- 10 321 697
- DE-A1-102004 050 428
- DE-A1-102007 038 112
- DE-B3-102004 040 129
- DE-U1-202010 001 059
- US-A- 4 702 134
- US-A1- 2004 177 896
- US-A1- 2006 137 764
- US-A1- 2008 029 511

## Beschreibung

Die Erfindung betrifft eine Kehlmaschine zum Bearbeiten von stabförmigen Werkstücken aus Holz, Kunststoff und dergleichen nach dem Oberbegriff des Anspruches 1. Eine solche Kehlmaschine ist aus der DE 10 2007 038 112 A1 bekannt. In einer Kehlmaschine, (DE 10 2007 038 112 A1) werden die Werkstücke im Durchlaufverfahren an vier Seiten bearbeitet. Die Maschine weist vertikale und horizontale Spindeln auf, auf denen die zur Bearbeitung des Werkstückes eingesetzten Werkzeuge sitzen. Je nach Bearbeitungsaufgabe nehmen die verschiedenen Spindeln, der Abrichttisch und das Fügelineal oberhalb des Abrichttisches unterschiedliche Lagen innerhalb der Maschine ein. Die Einstellungen der Maschinenelemente bestimmen die Werkstückdimensionen Breite und Höhe nach der Bearbeitung und in Verbindung mit dem Rohholz, ob die Werkstücke sauber gehobelt werden. Die richtige Einstellung der Maschinenelemente lässt sich allerdings erst nach dem Durchlauf der Werkstücke durch die Maschine feststellen. Ist wenigstens eines der Maschinenelemente nicht richtig eingestellt, dann stellt das durch die Maschine durchgelaufene Werkstück Ausschuss dar. Ist das Rohholz bezüglich der Einstellung zu klein oder gekrümmt, wird es gegebenenfalls nicht sauber gehobelt und stellt ebenfalls Ausschuss dar. Da mit den Maschinen unterschiedliche Werkstückdimensionen und Werkstückprofile erzeugt und diese bei geringer Anzahl und Laufmeter häufig geändert werden, stellt dieser Werkstückausschuss ein Problem dar.

Aus der US 4 702 134 ist eine Anlage zum Auftrennen bzw. Besäumen von Rohware mit Waldkante in einzelne Bretter bekannt. Die Rohware wird an ihren Längsseiten besäumt, wozu mit Hilfe von Lasern Laserstrahlen erzeugt werden, die den Sägeschnittverlauf anzeigen. Die Laser sind mit den Sägen gekoppelt und bewegen sich zusammen mit ihnen.

Die Anlage gemäß US 4 702 134 ist mit weiteren Lasern versehen, die in gleichmäßigen Abständen längs der Anlage angeordnet sind und quer zur Transportrichtung der Rohware Laserstrahlen erzeugen. Markierrollen werden längs dieser Laserstrahlen bewegt, um dem Bediener der Anlage anzuzeigen, an welchen Stellen der Rohware die Querschnitte angebracht werden sollen, um die Rohware in einzelne Rohwarenteile zu unterteilen.

Es ist weiter eine Holzbearbeitungsmaschine bekannt (US 2006/0137764 A1), mit der die Werkstücke an der Ober- und an der Unterseite mit Werkzeugen bearbeitet werden, die auf horizontalen Spindeln sitzen. Die am Werkstück vorzunehmende Spanabnahme wird durch Laserstrahlen angezeigt, die gegen das auf einem Abrichttisch befindliche Werkstück gerichtet sind. Der Laser ist mit einer der horizontalen Spindeln verbunden, zusammen mit ihr in Höhenrichtung verstellbar und so angeordnet, dass die Laserstrahlen unter einem Winkel schräg zur Durchlaufrichtung des Werkstückes durch die Maschine verlaufen. Der Laser kann auch maschinenfest so angeordnet sein, dass seine Laserstrahlen schräg zur Durchlaufrichtung des Werkstückes durch die Maschine verlaufen.

Der Erfindung liegt die Aufgabe zugrunde, die gattungsgemäße Kehlmaschine so auszubilden, dass ein Werkstückausschuss durch falsch eingestellte Maschinenelemente vermieden, zumindest aber auf ein Minimum reduziert wird.

Diese Aufgabe wird bei der gattungsgemäßen Kehlmaschine erfindungsgemäß mit den Merkmalen des Anspruches 1 gelöst.

Bei der erfindungsgemäßen Kehlmaschine erzeugen die von den Lasern ausgesandten Laserstrahlen auf dem Werkstück Geraden bzw. Linien, die dem Benutzer anzeigen, wie die Spanabnahme durch die entsprechenden Bearbeitungswerkzeuge aussehen wird und welche Werkstückdimensionen bzw. -geometrie sich durch die spätere Bearbeitung ergeben. Da sich das Werkstück noch auf dem Maschinentisch befindet, kann der Benutzer vor der Bearbeitung des Werkstückes anhand der auf dem Werkstück sich abzeichnenden Laserstrahlen feststellen, ob die Maschinenelemente für die anstehende Bearbeitungsaufgabe richtig eingestellt sind. Dadurch kann der Ausschuss an Werkstücken durch falsch eingestellte Maschinenelemente vermieden, zumindest jedoch auf ein Mindestmaß verringert werden. Der ortsfeste Laser mit seinem Laserstrahl kennzeichnet in der Kehlmaschine die Anschlagkante oder Anlageebene für das Werkstück bzw. die Null-Linie des Maschinentisches, auf dem das Werkstück beim Transport durch die Kehlmaschine aufliegt. Die Anschlagkante wird durch einen Anschlag gebildet, an dem die Werkstücke bei ihrem Durchlauf durch die Maschine mit ihrer rechten Längsseite anliegen. Bei einer Kehlmaschine ist die Nullstellung des Abrichttisches identisch mit der Nulllinie bzw. der Auflage- oder Bezugsebene des Maschinentisches. Wird der Abrichttisch in Höhenrichtung verstellt, dann kennzeichnet der auf die Nullstellung des Abrichttisches eingestellte Laserstrahl dementsprechend die Spanabnahme, die sich aufgrund der Höhenverstellung des Abrichttisches am Werkstück ergibt.

Der erste Laser ist mit einer in Transportrichtung des Werkstückes durch die Kehlmaschine linken vertikalen Spindel der Kehlmaschine gekoppelt. Wird diese Spindel quer zur Transportrichtung der Werkstücke verstellt, wird in gleichem Maße der erste Laser verstellt. Sein Laserstrahl erzeugt dann auf dem Werkstück die Gerade, die das Spanabnahmemaß entsprechend der verstellten vertikalen linken Spindel kennzeichnet.

Vorteilhaft wird ein dritter Laser mit einer der Spindeln, vorzugsweise mit einer oberen horizontalen Spindel, gekoppelt. Wird sie verstellt, wird dementsprechend auch der dritte Laser in gleichem Maße verstellt. Der von ihm ausgesandte Laserstrahl erzeugt dann auf dem Werkstück eine Gerade, die das Spanabnahmemaß in der eingestellten Lage dieser horizontalen Spindel angibt.

Durch den Einsatz aller vier Laser wird unmittelbar am Werkstück noch vor dem Einlauf in die Kehlmaschine der Endquerschnitt gekennzeichnet, den das Werkstück nach dem Durchlauf durch die Kehlmaschine erhält. Der Maschinenbenutzer kann somit vor dem Durchlauf des Werkstückes durch die Kehlmaschine feststellen, ob die Einstellungen der Spindeln, des Maschinentisches und des Fügelineales zutreffend sind und ob das Werkstück an allen vier Längsseiten sauber gehobelt sind.

Eine besonders vorteilhafte Ausführung ergibt sich, wenn die Laser an oder innerhalb einer Maschinenabdeckung vorgesehen sind. Die Laser sind dann in die Kehlmaschine integriert und gegen äußere Einflüsse geschützt. Eine gesonderte Montage der Laser ist nicht erfordert.

Damit der erste und der dritte Laser die Verschiebungen mit den zugehörigen Spindeln ausführen können, sind in der Maschinenabdeckung entsprechende Fenster für diese ersten und dritten Laser vorgesehen. Das Fenster für den ersten Laser erstreckt sich im Wesentlichen horizontal und das Fenster für den dritten Laser im Wesentlichen vertikal. Beide Fenster erstrecken sich quer zur Transportrichtung des Werkstückes.

Wenn der erste und der dritte Laser Licht unterschiedlicher Farbe abstrahlen, lassen sich durch diese unterschiedlichen Farben sehr einfach das Höhen- und das Breitenmaß des Werkstückes, das es nach dem Durchlauf durch die Kehlmaschine hat, erfassen.

Vorteilhaft ist es, wenn der erste und der zweite Laser sowie der dritte und der vierte Laser jeweils Licht in gleicher Farbe abstrahlen. Dann kann der Querschnitt, den das Werkstück nach dem Durchlauf durch die Maschine hat, besonders gut erfasst werden.

Damit eine sichere Anlage des Werkstückes an der Anlagekante des Fügelineales und Anschlages der Kehlmaschine gewährleistet ist, ist der Maschinentisch vorteilhaft in Richtung auf die Anlagekante geneigt. Das Werkstück liegt dann unter Schwerkraft stets an der Anlagekante an. Das Fügelineal oberhalb des Abrichttisches lässt sich vorteilhaft quer zur Transportrichtung des Werkstückes verstellen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Kehlmaschine,
- Fig. 2: in perspektivischer Darstellung ein Werkstück, das sich auf einem Abrichttisch am Maschineneinlauf befindet,
- Fig. 3: eine Stirnansicht der erfindungsgemäßen Kehlmaschine, in Richtung Maschineneinlauf gesehen.

Die Kehlmaschine dient zum Bearbeiten von Werkstücken 1 aus Holz, Kunststoff und dergleichen. Innerhalb der Maschine wird das Werkstück 1 im Durchlaufverfahren bearbeitet. Die Maschine ist eine Kehlmaschine. Sie hat einen im Einlaufbereich der Maschine befindlichen Abrichttisch 2, auf dem die Werkstücke 1 der Maschine zugeführt werden. An der in Einlaufrichtung rechten Seite des Abrichttisches 2 befindet sich ein Fügelineal 3, an dem das Werkstück mit seiner rechten Längsseite beim Transport anliegt. Das Fügelineal 3 ist quer zur Transportrichtung des Werkstückes 1 einstellbar, um das Maß der Spanabnahme an der rechten Längsseite des Werkstückes 1 einzustellen. Der Abrichttisch 2 lässt sich in vertikaler Richtung einstellen, wodurch das Maß der Spanabnahme an der Unterseite des Werkstückes 1 eingestellt werden kann.

Das Werkstück 1 gelangt über eine Einlauföffnung 4 in die Maschine. Im Maschinenraum ist eine horizontale untere Abrichtspindel vorgesehen, auf der ein Abrichtwerkzeug 5 drehfest sitzt, mit dem beim Durchlaufen des Werkstückes 1 dessen Unterseite spanabhebend bearbeitet, vorzugsweise geradegehobelt wird. In Transportrichtung hinter dem Abrichtwerkzeug 5 befindet sich eine vertikale rechte Spindel, auf der ein Werkzeug 6 sitzt, mit dem die in Transportrichtung rechte Längsseite des Werkstückes 1 bearbeitet, vorzugsweise geradegehobelt wird. Das Werkzeug ist ein Hobelkopf mit geraden Messern. Das Werkzeug 6 kann auch ein Profilierwerkzeug sein, mit dem an der rechten Werkstückseite ein Profil hergestellt wird.

In Transportrichtung des Werkstückes 1 hinter der rechten vertikalen Spindel befindet sich eine vertikale linke Spindel, auf der ein Werkzeug 7 sitzt, das vorzugsweise ein Hobelkopf ist, mit dem die linke Werkstückseite gerade gehobelt wird. Durch die Bearbeitung auf der rechten und linken Werkstückseite wird die Breite des fertigen Werkstückes erzeugt. Auch das Werkzeug auf der linken Seite kann ein Profilierwerkzeug sein, womit ein Profil hergestellt werden kann. Der Antrieb 8 für die vertikale linke Spindel befindet sich unterhalb eines Maschinentisches 9, der eine Transportbahn bildet, auf der die Werkstücke 1 aufliegend durch die Maschine transportiert werden. Der Maschinentisch 9 ist maschinenfest und bildet die horizontale Auflage- und Bezugsebene für die Werkstücke.

Nach dem rechten Werkzeug 6 wird das Werkstück an einem Anschlag 28, an dem es mit seiner rechten bearbeiteten Seite anliegt, weiter durch die Maschine geführt. Der Anschlag 28 ist maschinenfest und bildet die vertikale Anlage- und Bezugsebene.

In Transportrichtung hinter der linken vertikalen Spindel hat die Maschine eine obere horizontale Spindel, auf der ein Werkzeug 10 sitzt, mit dem die Oberseite des Werkstückes 1 bei seinem Durchlauf durch die Maschine bearbeitet wird. Mit dem Werkzeug 10 kann die Oberseite des Werkstückes 1 beispielsweise geradegehobelt werden. Es ist aber auch möglich, dass das Werkzeug 10 ein Profilierwerkzeug ist. Es liegt innerhalb einer Absaughaube 11. Die Bearbeitung an der Unterseite durch das Abrichtwerkzeug und der Oberseite durch die obere horizontale Spindel ergeben die Dicke des bearbeiteten Werkstückes.

In Transportrichtung vor und hinter der Absaughaube 11 sind Transportwalzen 12 zu erkennen, die auf dem Werkstück 1 aufliegen und es durch die Maschine transportieren. Das an allen vier Seiten bearbeitete Werkstück 1 gelangt durch eine Auslauföffnung 13 aus der Maschine.

Die beschriebenen Werkzeuge und Absaughauben befinden sich innerhalb einer Maschinenabdeckung 14.

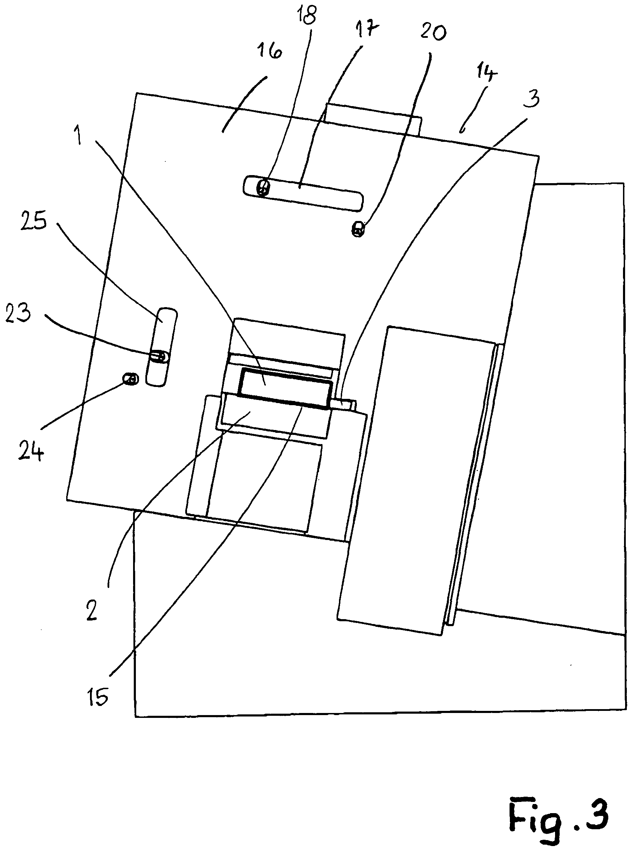

Wie sich aus Fig. 3 ergibt, ist die Auflageseite 15 des Abrichttisches 2 so geneigt, dass das Werkstück 1 mit seiner rechten Längsseite sicher in Anlage am Fügelineal 3 gehalten wird. Parallel dazu ist der Maschinentisch 9 in gleicher Form geneigt. Die Anlageflächen von Fügelineal 3 und Anschlag 28 stehen senkrecht dazu.

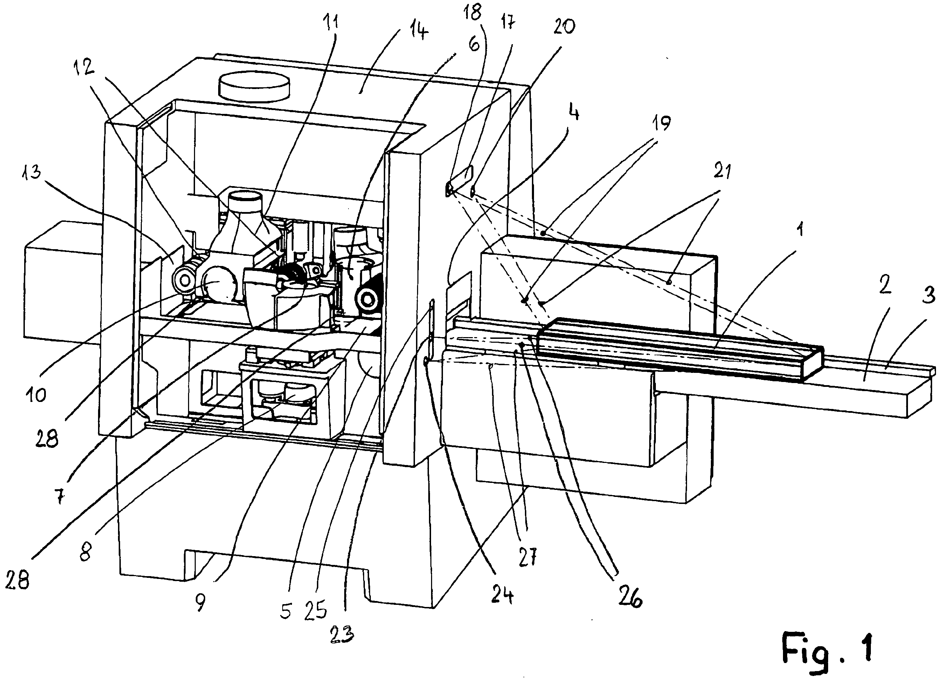

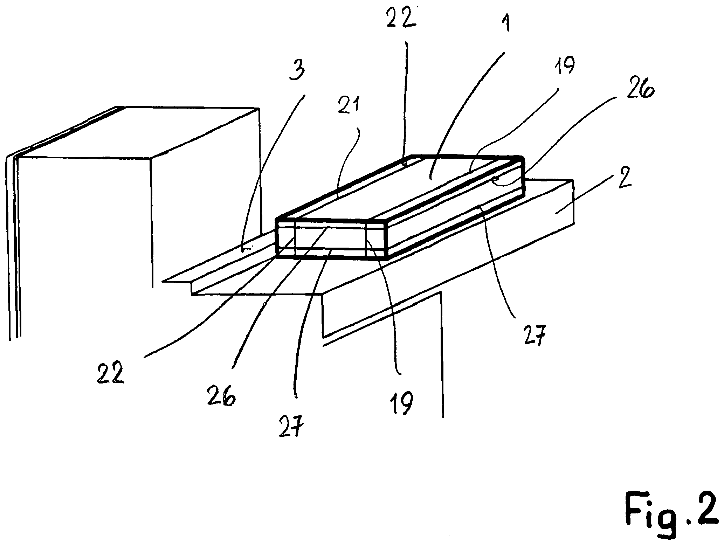

An der Eintrittsseite 16 der Maschinenabdeckung 14 befindet sich ein Fenster 17, das eine Ausdehnung senkrecht zur Transportrichtung des Werkstückes 1 hat und in dem sich ein Laser 18 befindet. Er ist mit der linken vertikalen Spindel der Maschine so gekoppelt, dass er zusammen mit dieser vertikalen linken Spindel verfahren wird. Das Fenster 17 erstreckt sich quer zur Transportrichtung des Werkstückes 1, wobei die Fensterbreite so bemessen ist, dass der Laser 18 zusammen mit der vertikalen linken Spindel um das Verstellmaß der linken Spindel quer zur Transportrichtung des Werkstückes 1 innerhalb des Fensters 17 verstellt werden kann. Die Kopplung kann rein mechanisch ausgeführt sein. Es ist auch möglich, dass beide Verstellungen motorisch über Positionierachsen erfolgen und die Kopplung rein steuerungstechnisch erfolgt. Der aus dem Laser 18 austretende Laserstrahl 19 (Fig. 1) ist der in Transportrichtung linken Seite des Werkstückes 1 zugeordnet. Mit dem Laserstrahl 19 wird im Einlaufbereich der Maschine auf dem Werkstück 1 das Maß der Werkstückabnahme durch das auf der linken vertikalen Spindel sitzende Werkzeug 7 angezeigt. Auf dem Werkstück 1 bildet sich der Laserstrahl 19 als entsprechende Linie ab, die sowohl auf der Oberseite des Werkstückes 1 als auch auf dessen Stirnseite sichtbar ist (Fig. 2). Durch diese Anzeige kann somit bereits vor der Bearbeitung des Werkstückes 1 das Maß der Spanabnahme an der linken Werkstückseite festgestellt werden. Falls immer Werkzeuge gleichen Flugkreis- bzw. Schneidendurchmessers eingesetzt werden, kann der Laser 18 immer fest mit der linken Spindel verbunden sein. Sollen auch Werkzeuge unterschiedlichen Durchmessers eingesetzt werden, muss der Laser 18 zu dem jeweiligen Durchmesser eingestellt werden. Bei der elektrischen Kopplung über eine Maschinensteuerung kann dies über eine sogenannte Radiuskorrektur realisiert werden. Beim Einsatz von Profilwerkzeugen wird die Werkstückbreite bzw. das größte Werkstückmaß durch den kleinsten bzw. innersten Schneidenradius der profilierten Werkstückmesser, der sogenannten Ablaufkante, erzeugt. In diesem Fall muss die Grundeinstellung des Lasers auf dieses Maß vorgenommen werden.

Im Bereich unterhalb des Lasers 18 ist an der Eintrittsseite der Maschinenabdeckung 14 ein weiterer Laser 20 vorgesehen, der im Unterschied zum Laser 18 maschinenfest und damit nicht verstellbar angeordnet ist. Der aus dem Laser 20 austretende Laserstrahl 21 erzeugt auf dem Werkstück 1 im Bereich der in Transportrichtung rechten Werkstückseite auf der Oberseite und der Stirnseite des Werkstückes 1 eine entsprechende Linie (Fig. 2). Der Laser 20 und der Laserstrahl 21 sind auf die Bezugsebene der Anschlagkante, welche der Nullstellung des Fügelineales 3 entspricht, ausgerichtet und zeigen auf dem Werkstück 1 die Breite bzw. Dicke des an der rechten Werkstückseite abzunehmenden Fügespanes 22 an. Diese ergibt sich durch die Stellung des Fügelineales 3 im Verhältnis zur Anschlagkante 28 in der Maschine und dem dazu eingestellten Schneidenflugkreis des rechten Hobelwerkzeuges

Mit den beiden Lasern 18, 20 kann dem Maschinenbenutzer somit bereits vor dem Einlauf des Werkstückes 1 in die Maschine angezeigt werden, wie die Abmessungen des Werkstückes 1 sein werden, nachdem es die Maschine durchlaufen hat und an seinen beiden Längsseiten Material abgetragen worden ist.

Die Maschine weist an der Eintrittsseite 16 weitere Laser 23 und 24 auf, von denen der Laser 23 innerhalb eines in etwa vertikalen Fensters 25 senkrecht zur Auflageebene des Abrichttisches 2 und parallel zu den Anlageflächen des Fügelineales 3 und Anschlages 28 verstellbar ist. Der Laser 23 ist mit der oberen horizontalen Spindel, auf der das Werkzeug 10 sitzt, gekoppelt. Dadurch wird der Laser 23 bei der Verstellung der oberen horizontalen Spindel entsprechend mit verstellt. Für die Kopplung gelten die gleichen Zusammenhänge wie für den Laser 18. Der vom Laser 23 ausgesandte Laserstrahl 26 erzeugt an der einlaufseitigen Stirnseite sowie an der anschließenden linken Längsseite des Werkstückes 1 nahe dessen Oberseite eine entsprechende Linie (Fig. 2). Der Abstand dieser Linie 26 von der Oberseite des Werkstückes 1 gibt das Maß an, das durch das Werkzeug 10 vom Werkstück 1 an dessen Oberseite abgenommen wird.

Der Laser 24 ist wiederum maschinenfest angeordnet und auf die Auflageebene des Maschinentisches 9 bzw. die Nullstellung des Abrichttisches 2 abgestimmt. Der vom Laser 24 ausgesandte Laserstrahl 27 trifft auf die einlaufseitige Stirnseite des Werkstückes 1 sowie auf dessen linke Längsseite und erzeugt dort eine durchgehende Gerade nahe der Werkstückunterseite. Der Abstand zwischen den am Werkstück 1 angezeigten Geraden 27 von der Werkstückunterseite kennzeichnet das Maß, das vom Abrichtwerkzeug 5 abgenommen wird. Dieses ist abhängig von der Stellung des Abrichttisches 2 in Bezug zum Maschinentisch 9 und dem dazu eingestellten Flugkreisdurchmesser des Abrichtwerkzeuges 5.

Die beiden maschinenfesten Laser 20, 24 sind jeweils auf das Nullmaß eingerichtet, so dass in Abhängigkeit der Stellungen von Abrichttisch 2 und Fügelineal 3 die Lage der von ihnen erzeugten Geraden am Werkstück 1 unmittelbar dem Benutzer der Maschine das Maß der Spanabnahme an den entsprechenden Seiten des Werkstückes 1 anzeigen.

Vorteilhaft ist es, wenn die Laser 18, 20 eine andere Laserstrahlfarbe erzeugen als die Lager 23, 24. Dann lässt sich für den Benutzer optisch sehr einfach die Breite und Höhe des Werkstückes 1 erkennen, die das Werkstück nach dem Durchlauf durch die Maschine erhält.

Wie Fig. 3 zeigt, befinden sich die Laser 18, 20 mit Abstand oberhalb des Werkstückes 1, so dass die von ihnen ausgehenden Laserstrahlen 19, 21 schräg nach unten gegen das Werkstück 1 gerichtet sind.

Die Laser 23, 24 befinden sich mit Abstand neben der in Transportrichtung linken Werkstückseite. Die von ihnen erzeugten Laserstrahlen 26, 27 treffen darum seitlich schräg auf das Werkstück 1. Dadurch lassen sich am Werkstück 1 die entsprechenden Geraden einfach erzeugen.

Da die Abmessungen des Werkstückes 1 nach der Bearbeitung bereits beim Einlauf in die Maschine durch die Laserstrahlen 19, 21, 26, 27 unmittelbar am Werkstück 1 kenntlich gemacht werden, kann der Bediener Fehleinstellungen der Maschine schon vor dem Einlauf des Werkstückes in die Maschine feststellen, korrigieren und erkennen, ob das Werkstück an allen Seiten sauber ausgehobelt wird. Insbesondere wenn das Werkstück gekrümmt ist oder über die Länge unterschiedliche Breite oder Dicke aufweist, kann es vorkommen, dass bei zu gering eingestellter Spanabnahme das Werkstück an einzelnen Seiten über seine Länge nicht sauber gehobelt wird. Dies wird schon vor der Bearbeitung deutlich sichtbar, wenn ein Laserstrahl nicht über die volle Länge oder den vollen Querschnitt auf das Werkstück trifft, sondern aus diesem austritt. Ggf. kann er die Maschine anhalten, bevor das Werkstück in die Maschine transportiert wird. Der Ausschuss an Werkstücken aufgrund falsch eingestellter Spindeln, zu kleinem, gekrümmtem oder falschem Rohholz kann dadurch verhindert, zumindest aber auf ein minimales Maß reduziert werden. Da die Laser 18, 23 direkt mit der linken vertikalen Spindel bzw. der oberen horizontalen Spindel gekoppelt sind, erfolgt die Laserverstellung unmittelbar durch Verstellung dieser Spindeln in der Maschine. Die beiden Laser 18, 23 zeigen direkt an, wie das Werkstück an der linken und oberen Seite bearbeitet werden wird. Die beiden anderen Laser 20, 24 sind auf das Maß Null eingestellt, so dass durch Verstellung des Fügelineals 3 bzw. der Höhenverstellung des Abrichttisches 2 unmittelbar das Maß der Spanabnahme kenntlich gemacht wird. Bei der Verstellung des Fügelineals 3 sowie des Abrichttisches 2 bleiben die entsprechenden Laserstrahlen 21, 27 stehen, so dass der Verstellweg des Fügelineales 3 bzw. des Abrichttisches 2 aus der Nullstellung heraus unmittelbar das Spanabnahmemaß kennzeichnet. Da das Werkstück 1 immer auf dem Abrichttisch 2 auf- und am Fügelineal 3 anliegt, wird dieses bei deren Verstellung mit bewegt. Die Laserstrahlen 19 und 26 zeigen direkt die eingestellte Bearbeitung auf der linken und oberen Seite an. Damit wird auch sofort sichtbar, wenn beispielsweise durch eine zu groß eingestellte Spanabnahme an der Abrichtspindel oder am Fügelineal das Werkstück an der gegenüberliegenden Seite nicht mehr sauber gehobelt wird. Damit lässt sich die Einrichtung auch zur optimalen Einstellung der Maschine nutzen, dass alle Seiten des Werkstücks sauber gehobelt werden.

Im beschriebenen Ausführungsbeispiel ist für jede zu bearbeitende Werkstückseite ein Laser vorgesehen, so dass die Spanabnahme an allen zu bearbeitenden Werkstückseiten angezeigt wird. Die Maschine ist bevorzugt eine Kehlmaschine. Die Laser können aber auch an anderen Bearbeitungsmaschinen vorgesehen sein. Mit den Lasern lässt sich bei solchen Bearbeitungsmaschinen vor der Bearbeitung das Spanabnahmemaß feststellen. Auch in diesem Fall entspricht die Zahl der Laser der Zahl der zu bearbeitenden Werkstückseiten.

## Patentansprüche

1. Kehlmaschine zum Bearbeiten von stabförmigen Werkstücken (1) aus Holz, Kunststoff und dergleichen, mit einem Maschinentisch (9), auf dem die Werkstücke (1) zur Bearbeitung aufliegen, einem Abrichttisch (2), auf dem die Werkstücke (1) der Kehlmaschine zugeführt werden, welche horizontale und vertikale Spindeln aufweist, auf denen Bearbeitungswerkzeuge sitzen, mit denen die vier Seiten des Werkstückes (1) bei dessen Durchlauf durch die Kehlmaschine bearbeitet werden, **dadurch gekennzeichnet, dass** wenigstens zwei Laser (18, 20, 24) vorgesehen sind, deren Laserstrahlen (19, 21, 27) gegen das auf dem Abrichttisch (2) befindliche Werkstück (1) gerichtet sind und am Werkstück (1) Geraden erzeugen, die die Spanabnahme durch die Bearbeitungswerkzeuge (5 bis 7) am Werkstück (1) und somit die durch die spätere Bearbeitung sich ergebende Werkstückdimensionen bzw.-geometrie anzeigen, dass der erste Laser (18) mit einer linken vertikalen Spindel gekoppelt und zusammen mit ihr verstellbar ist, und dass ein zweiter Laser (20, 24) ortsfest angeordnet ist und sein Laserstrahl (21, 27) die Null-Linie eines Anschlags (28), welcher eine Anschlagkante oder Anlageebene für das Werkstück (1) beim Transport durch die Kehlmaschine bildet, bzw. die Null-Linie des Maschinentisches (9) als Gerade am Werkstück (1) kennzeichnet.

2. Kehlmaschine nach Anspruch 1,
**dadurch gekennzeichnet, dass** ein dritter Laser (23) mit einer oberen horizontalen Spindel (10) gekoppelt und zusammen mit ihr verstellbar ist.

3. Kehlmaschine nach Anspruch 1 oder 2,
**dadurch gekennzeichnet, dass** die Laser (18, 20, 23, 24) an oder innerhalb einer Maschinenabdeckung (14) vorgesehen sind.

4. Kehlmaschine nach Anspruch 2,
**dadurch gekennzeichnet, dass** der erste und der dritte Laser (18, 23) in Fenstern (17, 25) in der Maschinenabdeckung (14) angeordnet sind, von denen sich das Fenster (17) für den ersten Laser (18) etwa horizontal und quer zur Transportrichtung des Werkstückes (1) und das Fenster (25) für den dritten Laser (23) etwa vertikal und quer zur Transportrichtung des Werkstückes (1) erstrecken.

5. Kehlmaschine nach Anspruch 2,
**dadurch gekennzeichnet, dass** der erste und der dritte Laser (18, 23) Licht unterschiedlicher Farbe abstrahlen.

6. Kehlmaschine nach einem der Ansprüche 1 bis 5,
**dadurch gekennzeichnet, dass** ein Abrichttisch (2) und der Maschinentisch (9) der Kehlmaschine in Richtung auf die Anschlagkante für das Werkstück (1) geneigt sind.

7. Kehlmaschine nach einem der Ansprüche 1 bis 6,
**dadurch gekennzeichnet, dass** das Fügelineal (3) oberhalb des Abrichttisches (2) quer zur Transportrichtung des Werkstückes (1) verstellbar ist.

## Claims

1. A moulder for machining rod-shaped workpieces (1) consisting of wood, plastic and the like, with a machine table (9), on which the workpieces (1) lie while they are processed, and with a truing table (2), on which the workpieces (1) are fed to the moulder, wherein the moulder features horizontal and vertical spindles with machining tools arranged thereon, and wherein said machining tools serve for machining the four sides of the workpiece (1) during its pass through the moulder,
**characterized in that** at least two lasers (18, 20, 24) are provided, the laser beams (19, 21, 27) of which are directed at the workpiece (1) located on the truing table (2) and project straight lines onto the workpiece (1), wherein said straight lines indicate the chip removal from the workpiece (1) by means of the machining tools (5-7) and therefore the workpiece dimensions or workpiece geometry resulting from the subsequent machining, **in that** the first laser (18) is coupled to a left vertical spindle and can be adjusted together this spindle, and **in that** a second laser (20, 24) is arranged in a stationary fashion and its laser beam (21, 27) respectively projects the zero line of a fence (28), which forms a guide edge or guide plane for the workpiece (1) during its transport through the moulder, or the zero line of the machine table (9) onto the workpiece (1) in the form of a straight line.

2. The moulder according to claim 1, **characterized in that** a third laser (23) is coupled to an upper horizontal spindle (10) and can be adjusted together with this spindle.

3. The moulder according to claim 1 or 2,
**characterized in that** the lasers (18, 20, 23, 24) are arranged on or within a machine cover (14).

4. The moulder according to claim 2,
**characterized in that** the first and the third lasers (18, 23) are arranged in windows (17, 25) in the machine cover (14), wherein the window (17) for the first laser (18) extends about horizontally and transverse to the transport direction of the workpiece (1) and the window (25) for the third laser (23) extends about vertically and transverse to the transport direction of the workpiece (1).

5. The moulder according to claim 2,
**characterized in that** the first and the third laser (18, 23) emit light of different colors.

6. The moulder according to one of claims 1 to 5,
**characterized in that** a truing table (2) and the machine table (9) of the moulder are inclined in the direction of the guide edge for the workpiece (1).

7. The moulder according to one of claims 1 to 6,
**characterized in that** the edge jointing fence (3) above the truing table (2) can be adjusted transverse to the transport direction of the workpiece (1).

## Revendications

1. Machine à moulurer pour l'usinage de pièces en forme de barres (1) en bois, matière plastique ou similaire, comprenant une table de machine (9) sur laquelle reposent les pièces (1) à usiner, une table à dégauchir (2) sur laquelle les pièces (1) de la machine à moulurer sont amenées, laquelle présente des tiges horizontales et verticales sur lesquelles des outils d'usinage sont placés, avec lesquels les quatre côtés de la pièce (1) sont usinés lors de son passage à travers la machine à moulurer, **caractérisée en ce qu'**au moins deux lasers (18, 20, 24) sont prévus, dont les faisceaux laser (19, 21, 27) sont dirigés contre la pièce (1) se trouvant sur la table à dégauchir (2) et produisent des lignes droites sur la pièce (1) qui indiquent l'enlèvement de copeaux par les outils d'usinage (5 à 7) sur la pièce (1) et ainsi les dimensions, respectivement la géométrie, de la pièce produites par l'usinage ultérieur, que le premier laser (18) est couplé à une tige verticale gauche et peut être déplacé conjointement avec celle-ci, et qu'un deuxième laser (20, 24) est disposé fixe et son faisceau laser (21, 27) caractérise la ligne zéro d'une butée (28) qui forme une arête de butée ou un plan d'appui pour la pièce (1) lors du transport à travers la machine à moulurer, respectivement caractérise la ligne zéro de la table de machine (9) en tant que ligne droite sur la pièce (1).

2. Machine à moulurer selon la revendication 1, **caractérisée en ce qu'**un troisième laser (23) est couplé à une tige horizontale supérieure (10) et est réglable conjointement avec elle.

3. Machine à moulurer selon la revendication 1 ou 2,
**caractérisée en ce que** les lasers (18, 20, 23, 24) sont prévus sur ou à l'intérieur d'un couvercle de machine (14).

4. Machine à moulurer selon la revendication 2,
**caractérisée en ce que** les premier et troisième lasers (18, 23) sont disposés dans des fenêtres (17, 25) dans le couvercle de machine (14), desquelles la fenêtre (17) pour le premier laser (18) s'étend sensiblement horizontalement et transversalement au sens de transport de la pièce (1) et la fenêtre (25) pour le troisième laser (23) s'étend sensiblement verticalement et transversalement au sens de transport de la pièce (1).

5. Machine à moulurer selon la revendication 2, **caractérisée en ce que** les premier et troisième lasers (18, 23) émettent de la lumière de couleur différente.

6. Machine à moulurer selon l'une des revendications 1 à 5,
**caractérisée en ce qu'**une table à dégauchir (2) et la table (9) de la machine à moulurer sont inclinées sur l'arête de butée pour la pièce (1).

7. Machine à moulurer selon l'une des revendications 1 à 6,
**caractérisée en ce que** la réglette de jointure (3) au-dessus de la table à dégauchir (2) peut être déplacée transversalement au sens de transport de la pièce (1).
